# EUROPEAN PATENT APPLICATION

(11) **EP 4 579 981 A1**
(43) Date of publication of application: **02.07.2025**
(21) Application number: 24222609.0
(22) Date of filing: 20.12.2024
(51) Int. Cl.: H02J 3/32, H02J 3/38, H02J 7/35, H01H 9/26, H02H 7/26

(54) **PHOTOVOLTAIC POWER SUPPLY SYSTEM AND BACKUP BOX**

(30) Priority: 29.12.2023 CN 202311871944
(71) Applicant: Huawei Digital Power Technologies Co., Ltd., Shenzhen, Guangdong 518043 (CN)
(72) Inventor: GUO, Yunhui, Shenzhen, 518043 (CN)
(74) Representative: Gill Jennings & Every LLP

(57) **Abstract**

This application discloses a photovoltaic power supply system and a backup box. The photovoltaic power supply system includes a photovoltaic system and a backup box. A grid-connected/off-grid switch in the backup box includes a main contact and an auxiliary contact. The main contact and the auxiliary contact are linked, and the auxiliary contact operates in conjunction with a detection circuit in an inverter in the photovoltaic system, so that the inverter can detect a grid-connected/off state of the grid-connected/off-grid switch in the backup box before the backup box operates. Through a communication circuit in the backup box, the inverter and the backup box may further perform information transfer. These functions are implemented by an ingenious circuit design and a potential change at a potential detection point.

## Description

### TECHNICAL FIELD

This application relates to the field of power electronics technologies, and in particular, to a photovoltaic power supply system and a backup box.

### BACKGROUND

In the field of new energy power generation, such as solar power generation and wind power generation, a new energy power generation system can supply power to both a local load and a power grid, and based on a status of the power grid, the new energy power generation system needs to switch its power supply object. For example, when the new energy power generation system has an adequate power generation capacity and the power grid operates normally, the new energy power generation system supplies power to both the local load and the power grid; but when the power grid is faulty, the new energy power generation system needs to disconnect from the power grid in a timely manner to prevent the local load from being affected by the fault of the power grid, thereby ensuring the safety of the local load.

One approach is to install a backup box between the new energy power generation system, the local load, and the power grid. The backup box can control the circulation and disconnection of electrical energy between the new energy power generation system and the power grid, and between the new energy power generation system and the local load, to isolate faults of the power grid, the local load, and the new energy power generation system and prevent the spread of the faults.

However, it is difficult for the new energy power generation system, the local load, and the power grid to sense a fault of the backup box. If the fault of the backup box is not sensed in a timely manner, timely prevention of fault spreading will fail and personal safety may be endangered.

### SUMMARY

A technical solution provided in this application is applied to a new energy power supply system having a grid-connected/off-grid switching capability, and is particularly applicable to a residential photovoltaic system or a photovoltaic microgrid system. According to the technical solution, before a photovoltaic system supplies power to a backup box connected to a power grid, an operating status of the inside of the backup box is first detected, and whether to supply power to the power grid is determined based on a signal fed back by the inside of the backup box, to resolve a safety problem caused because a status of the backup box cannot be sensed.

According to a first aspect, this application provides a photovoltaic power supply system, including an inverter and a backup box, where an input end of the inverter is configured to connect to a photovoltaic module, an output end of the inverter is connected to an input end of the backup box, and a power grid output end of the backup box is configured to connect to a power grid; the backup box includes a grid-connected/off-grid switch, and the grid-connected/off-grid switch includes a main contact and an auxiliary contact; the inverter includes a potential detection point and a direct current auxiliary source; the input end of the backup box is connected to the power grid output end of the backup box through the main contact; one end of the auxiliary contact is connected to one end of the potential detection point, the other end of the auxiliary contact is grounded, and the other end of the potential detection point is connected to the direct current auxiliary source; and when the inverter does not supply power to the backup box and the main contact is at an off position, the auxiliary contact is at an on position, so that a potential at the potential detection point is a first potential; or when the inverter does not supply power to the backup box and the main contact is at an on position, the auxiliary contact is at an off position, so that a potential at the potential detection point is a second potential, where the first potential is different from the second potential.

The photovoltaic power supply system includes a photovoltaic system including the inverter and the photovoltaic module, and a power supply path of the photovoltaic system is connected with the power grid through the backup box. Before the photovoltaic system having a power generation capacity prepares to supply power to the power grid, a value of the potential at the potential detection point in the inverter is used to quickly determine whether the backup box is disconnected from the power grid, to ensure that the power grid side is not directly powered on after the photovoltaic system supplies power to the backup box and starts the backup box, and ensure the safety of the inspection, maintenance, and other work that may be performed on the power grid side. After the entire photovoltaic power supply system meets a grid-connected condition, the grid-connected/off-grid switch in the backup box is turned on by using a on-grid instruction or the like, to implement an electrical connection between the photovoltaic system and a power grid system.

In a possible implementation, the main contact and the auxiliary contact are mechanically linked, and when a position of the main contact changes, a position of the auxiliary contact also changes, or when a position of the auxiliary contact changes, a position of the main contact also changes.

In a possible implementation, the backup box includes a second switch and a communication switch; one end of the second switch is connected to the auxiliary contact, and the other end of the second switch is grounded; and one end of the communication switch is connected to the potential detection point, and the other end of the communication switch is grounded; and when the inverter does not supply power to the backup box, the communication switch is in an off state, and the second switch is in an on state; or when the inverter supplies power to the backup box, the second switch is in an off state.

In a possible implementation, when the inverter supplies power to the backup box, the communication switch is configured to be turned on or turned off, so that the potential at the potential detection point is the first potential or the second potential.

After the photovoltaic system supplies power to the backup box, the backup box is woken up, and a controller of the backup box controls the second switch to be in an off state, so that a potential detection loop of the backup box is disconnected. In this case, the controller of the backup box controls the communication switch to perform turn-on and turn-off actions, so that a loop of a communication circuit is connected and disconnected. A detection circuit of the inverter detects the potential at the potential detection point, and when the communication circuit is continuously connected and disconnected, receives two types of constantly alternating potential signals, where the two types of potential signals correspond to digital signals 1 and 0. This implements signal transmission and processing in a binary manner.

In a possible implementation, the inverter includes a detection circuit, and the detection circuit is configured to detect the potential at the potential detection point before the inverter supplies power to the backup box; and if the potential at the potential detection point before the inverter supplies power to the backup box is the first potential, the inverter supplies power to the backup box.

In a possible implementation, the inverter includes a grid-connected/off-grid controller, the backup box includes a grid-connected/off-grid switch controller, and the grid-connected/off-grid controller is communicatively connected to the grid-connected/off-grid switch controller. The grid-connected/off-grid controller is configured to send a grid-connected instruction to the grid-connected/off-grid switch controller when the inverter does not supply power to the backup box and the potential at the potential detection point is the first potential. The grid-connected/off-grid switch controller is configured to control, when receiving the grid-connected instruction, the main contact to be in an on state.

In a possible implementation, a load is included. The backup box includes a load output end, one end of the load output end is connected to the input end, and the other end of the load output end is configured to connect to the load.

According to a second aspect, this application provides a backup box, including a grid-connected/off-grid switch, an input end, and a power grid output end. The grid-connected/off-grid switch includes a main contact and an auxiliary contact, the input end is connected to the power grid output end through the main contact, the input end is configured to connect to an output end of an alternating current power supply, and the power grid output end is configured to connect to a power grid. One end of the auxiliary contact is configured to connect to one end of a potential detection point of the alternating current power supply, the other end of the auxiliary contact is grounded, and the other end of the potential detection point is connected to a direct current auxiliary source in the alternating current power supply. When the alternating current power supply does not supply power to the backup box and the main contact is at an off position, the auxiliary contact is at an on position, so that a potential at the potential detection point is a first potential; or when the alternating current power supply does not supply power to the backup box and the main contact is at an on position, the auxiliary contact is at an off position, so that a potential at the potential detection point is a second potential, where the first potential is different from the second potential.

In a possible implementation, the main contact and the auxiliary contact are mechanically linked, and when a position of the main contact changes, a position of the auxiliary contact also changes, or when a position of the auxiliary contact changes, a position of the main contact also changes.

In a possible implementation, the backup box includes a second switch and a communication switch; one end of the second switch is connected to the auxiliary contact, and the other end of the second switch is grounded; and one end of the communication switch is connected to the potential detection point, and the other end of the communication switch is grounded; and when the alternating current power supply does not supply power to the backup box, the communication switch is in an off state, and the second switch is in an on state; or when the alternating current power supply supplies power to the backup box, the second switch is in an off state.

In a possible implementation, when the alternating current power supply supplies power to the backup box, the communication switch is configured to be turned on or turned off, so that the potential at the potential detection point is the first potential or the second potential.

In a possible implementation, a grid-connected/off-grid switch controller is included, where the grid-connected/off-grid switch controller is configured to control, when receiving a grid-connected instruction, the grid-connected/off-grid switch to be turned on.

In a possible implementation, a load output end is included, where one end of the load output end is connected to the input end, and the other end of the load output end is configured to connect to a load.

### BRIEF DESCRIPTION OF DRAWINGS

FIG. 1 is a diagram of a usage scenario of a photovoltaic power supply system according to an embodiment of this application;
FIG. 2 is a diagram of circuit connection of a photovoltaic power supply system when a backup box is in a grid-connected state according to this application;
FIG. 3 is a diagram of circuit connection of a photovoltaic power supply system when a backup box is in an off-grid state according to this application;
FIG. 4 is a diagram of another circuit connection of a photovoltaic power supply system when a backup box is in a grid-connected/off-grid state according to this application; and
FIG. 5 is a diagram of another communication principle of a photovoltaic power supply system according to this application.

### DESCRIPTION OF EMBODIMENTS

To make the objectives, features and advantages of this application more comprehensible, this application is further illustrated in detail in the following with reference to the accompanying drawings and specific embodiments.

The "an embodiment" or "embodiment" herein refers to a particular feature, structure, or feature that may be included in at least one implementation of this application. A statement of "in an embodiment" that appears in different places of this specification does not mean a same embodiment, and is not a separate or selective embodiment that is mutually exclusive with another embodiment. Unless otherwise specified, in this specification, terms "connection", "joint connection", or "linkage" that represent an electrical connection all represent a direct or indirect electrical connection.

The following terms "first", "second", and the like are merely used for description, and shall not be understood as an indication or implication of relative importance or implicit indication of a quantity of indicated technical features. Therefore, a feature limited by "first ", "second" and the like all explicitly indicate or implicitly include one or more such features. In description of this application, unless otherwise stated, "plurality" means two or more than two

A technical solution provided in this application is applied to a new energy power supply system having a grid-connected/off-grid switching capability, and is particularly applicable to a residential photovoltaic system or a photovoltaic microgrid system. In this technical solution, before the photovoltaic system prepares to supply power to a backup box and therefore supplies power to a power grid, an operating status of the inside of the backup box is first detected, and whether to supply power to the power grid is determined based on a signal fed back by the inside of the backup box, to ensure safety of power supply by the photovoltaic system.

The technical solution provided in embodiments of this application is applied to all grid-connected/off-grid power supply scenarios in which a backup box is required. The backup box mentioned in this application is a device for implementing an electrical connection between two or more power systems. In particular, the backup box can further implement disconnection or connection between at least two power systems, and is also referred to as another name such as a power distribution box.

The backup box usually has two or more power line interfaces for connecting with different power systems, and implements power transmission between the specific power systems through a designed circuit inside the backup box. The backup box further has a relay, a switching transistor, or other devices to implement connection and disconnection of a specific line, and implement electrical connection and disconnection between the specific power systems. In addition, the backup box may further have a communication port, which is used to connect to another device through a communication cable, to transmit a signal between the backup box and another power system.

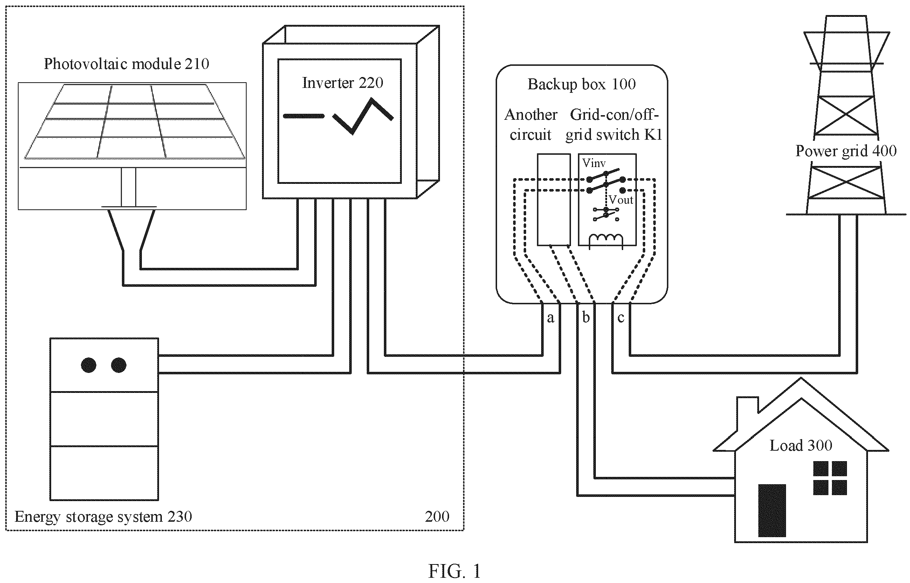

For an application scenario provided in this application, refer to FIG. 1. FIG. 1 is a diagram of a usage scenario of a photovoltaic power supply system according to an embodiment of this application. The photovoltaic power supply system includes a photovoltaic system 200 and a backup box 100. The backup box 100 can implement electrical connections between the photovoltaic system 200, a load 300, and a power grid 400, and transmit, to the load 300 and/or the power grid 400, an alternating current sent by the photovoltaic system 200. Particularly, the backup box 100 is further configured to implement electrical disconnection between the photovoltaic system 200 and the power grid 400 at any time when necessary, to implement electrical isolation between the power grid 400 and the photovoltaic system 200 and between the load 300 and the photovoltaic system 200.

In the foregoing application scenario, in a normal operating process, the photovoltaic system 200 transmits, through solar power generation, generated electrical energy to the load 300 and the power grid 400 by using the backup box 100. If an abnormal fault occurs in the power grid 400, to prevent impact of the abnormal fault of the power grid 400 from spreading to the load 300, a grid-connected/off-grid switch K1 in the backup box 100 is turned off, to implement electrical isolation between the load 300 and the power grid 400, and ensure safe operation of the load 300. The photovoltaic system 200 continues to normally supply power to the load 300.

The photovoltaic system 200 includes a photovoltaic module 210 and an inverter 220. The photovoltaic module 210 generates a direct current through a photovoltaic effect and transmits the direct current to the inverter 220. The inverter 220 performs power conversion from direct current to alternating current by using an inverter circuit inside the inverter 220, to be specific, converts the direct current generated by the photovoltaic module 210 into an alternating current, and outputs the alternating current to the load 300 or the power grid 400 through the backup box 100. In an implementation, the photovoltaic system 200 further includes an energy storage system 230. A direct current generated by the photovoltaic module 210 is transmitted to the energy storage system 230 through the inverter 220 for storage. In a poor sun radiation condition or during the night, electricity stored in the energy storage system 230 is transmitted to the inverter 220 in a form of direct current, and then the inverter 220 performs power conversion from direct current to alternating current, and transmits an alternating current to the load 300 or the power grid 400 through the backup box 100.

The backup box 100 includes a port a, a port b, and a port c. The photovoltaic system 200 is connected to the backup box 100 through the port a, the load 300 is connected to the backup box 100 through the port b, and the power grid 400 is connected to the backup box 100 through the port c. Inside the backup box 100, there is a power line that directly connects the port a and the port b, to implement an electrical connection between the photovoltaic system 200 and the load 300. Generally, some circuits (such as another circuit in the figure) inside the backup box 100 are specially responsible for distributing electrical energy transmitted by the photovoltaic system 200 through the port a, and separately transmitting the electrical energy to the port b or the port c. The circuits may be some simple cables or copper bars. This is not limited herein.

In an implementation, the grid-connected/off-grid switch K1 is disposed inside the backup box 100. After passing through the electrical energy distribution circuit, the port a is connected to the port c through a power input Vin and a power output Vout of the grid-connected/off-grid switch K1. In this way, by turning on and turning off the grid-connected/off-grid switch K1, the power input Vin and the power output Vout are connected and disconnected, then the port a and the port c are electrically connected and disconnected, and finally, the photovoltaic system 200 and the power grid 400 are connected and disconnected.

It should be noted that, when an abnormal fault occurs on the power grid 400, the grid-connected/off-grid switch K1 usually needs to be turned off, so that another system is disconnected from the power grid 400, thereby ensuring safety of the another system. Similarly, in a poor sun radiation condition or during the night, if the power grid 400 is powered off and cannot supply power to the load 300, electrical energy stored by the energy storage system 230 needs to be supplied to the load 300 through the inverter 220 because a power generation capacity of the photovoltaic module 210 is relatively low or the photovoltaic module 210 does not generate power at all. Because electricity stored in the energy storage system 230 is usually limited, it is not expected that the electricity stored in the energy storage system 230 is transmitted to the power grid 400, to ensure that all the stored electricity is provided to the load 300. In this case, the grid-connected/off-grid switch K1 is turned off, thereby disconnecting a path through which the energy storage system 230 transfers electrical energy to the power grid 400. In this case, because the photovoltaic system 200 supplies power to the backup box 100, the backup box 100 is always in a normal operating state. The backup box 100 notifies the inverter 220 of an operating status, for example, whether the grid-connected/off-grid switch K1 is in an off state, of the backup box 100 through normal communication. The communication herein is RS485 communication, CAN communication, or the like, which is not limited herein.

In another case, in a poor sun radiation condition or during the night, the photovoltaic system 200 cannot supply power to the load 300. In this case, an electrical energy source of the load 300 may be the power grid 400 or another power supply device, the grid-connected/off-grid switch K1 in the backup box 100 is turned off, the inverter 220 does not operate, the photovoltaic module 210 does not generate power, and the energy storage system 230 continues to store electrical energy and does not provide electrical energy for the outside. In this case, due to the absence of power supply from the photovoltaic system 200, the backup box 100 does not operate and cannot notify the inverter 220 of the operating status of the backup box 100 at this time through communication.

It should be understood that, after the power grid 400 is powered off and the inverter 220 stops operating, when the inverter 220 is restored and starts next time, which is also referred to as a "black start", it needs to first know whether the grid-connected/off-grid switch K1 in the backup box 100 is effectively turned off, to determine whether to supply power to the backup box 100 in this case. For example, when the photovoltaic system 200 is restored with a power supply capability, and the power grid 400 is under maintenance, if the grid-connected/off-grid switch K1 in the backup box 100 is still in an off state by default but actually may not be effectively turned off due to a factor such as aging, a short circuit occurs. This causes the backup box 100 and the power grid 400 that should be disconnected to have an electrical connection. In this case, a direct black start of the photovoltaic system 200 may endanger personal safety of maintenance personnel.

The backup box 100 has a function of enabling the inverter 220 to detect, by using a potential signal, an on state or an off state of the grid-connected/off-grid switch K1 in the backup box 100, so that the inverter 220 accurately learns, before the black start, whether a condition for performing the black start is met, thereby ensuring safety of an entire power system and personnel.

In this embodiment of this application, the backup box 100 includes one grid-connected/off-grid switch K1. An input end of the backup box 100 is connected to a power grid output end of the backup box 100 through the grid-connected/off-grid switch K1. The input end of the backup box 100 is configured to connect to an alternating current power supply, for example, connected to an alternating current output end of the inverter 220 in the photovoltaic system 200, and an output end of the backup box 100 is configured to connect to the load 300 and/or the power grid 400.

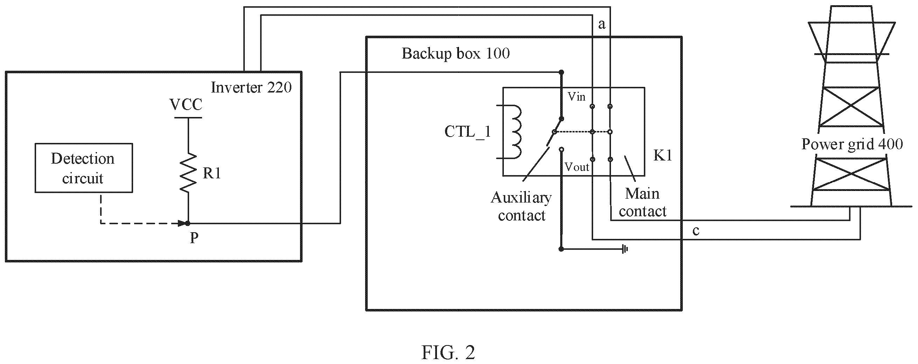

FIG. 2 is a diagram of circuit connection of a photovoltaic power supply system when a backup box is in a grid-connected state according to this application. The inverter 220 has a detection circuit, configured to obtain a potential at a potential detection point P. The grid-connected/off-grid switch K1 in the backup box 100 actually includes two parts: a main contact, and an auxiliary contact. In the foregoing embodiment, the grid-connected/off-grid switch K1 being turned on or off actually means the main contact being turned on or off. As shown in FIG. 2, the potential detection point P is connected to one end of the auxiliary contact, the other end of the auxiliary contact is grounded, and when the main contact is at an on position, the auxiliary contact is at an off position. Further, the main contact and the auxiliary contact are designed to be mechanically linked, so that when the main contact is at an off position, the auxiliary contact is at an on position, and an on or off state of the grid-connected/off-grid switch K1 is known by using the potential at the potential detection point P. For example, a direct current source VCC in the inverter 220 applies a direct current voltage to the potential detection point P, so that turn-on and turn-off of the auxiliary contact enable the potential at the potential detection point to vary between one potential and another. Further, because on and off states of the auxiliary contact are associated with off and on states of the main contact, that is, associated with off and on states of the grid-connected/off-grid switch K1, the inverter 220 can determine, by directly detecting a level of the potential at the potential detection point P before a black start, whether the grid-connected/off-grid switch K1 is in an off state. There is a resistor R1 disposed between the direct current source VCC and the potential detection point P to prevent excessive current, generated when the detection circuit is connected during the black start, from causing an excessive current flow pressure to a relay. The detection circuit in the inverter 220 can detect potential information of the potential detection point P. The direct current source VCC is a direct current auxiliary source in the inverter 220, and an output direct current voltage of the direct current source VCC is a low voltage such as 12 V, 5 V, or 3.3 V. The resistor R1 is designed based on a voltage of the direct current source VCC, which is not limited herein. Still refer to FIG. 2. If the direct current voltage uses a 3.3 V low voltage, and the grid-connected/off-grid switch K1 is in an on state, that is, the main contact is at the on position, and the auxiliary contact is at the off position, a potential at the potential detection point P relative to the ground is 3.3 V.

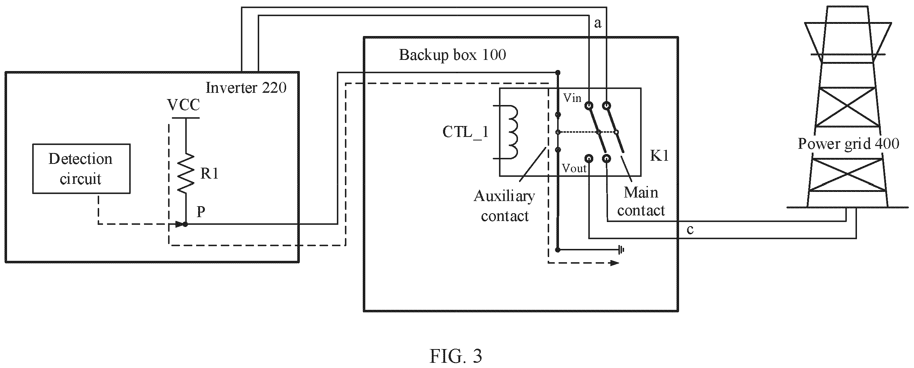

Further, refer to FIG. 3. The grid-connected/off-grid switch K1 is in an off state, that is, the main contact is at the off position, and the auxiliary contact is at the on position. Because the potential detection point P is grounded through the auxiliary contact, the potential at the potential detection point P relative to the ground is 0 V.

With reference to FIG. 2 and FIG. 3, the foregoing embodiment is summarized. The direct current source VCC, the resistor R1, the auxiliary contact, and the ground form a potential detection loop. When the grid-connected/off-grid switch K1 is in an on state, that is, the main contact is at the on position, and the auxiliary contact is at the off position, the potential at the potential detection point P is equal to that of the direct current source VCC, where the potential is recorded as a first potential with a value of 12 V, 5 V, 3.3 V, or the like as described above. When the grid-connected/off-grid switch K1 is in an off state, that is, the main contact is at the off position, and the auxiliary contact is at the on position, the potential at the potential detection point P is equal to that of the ground, where the potential is recorded as a second potential, and because the potential is equal to the ground potential, the potential is 0.

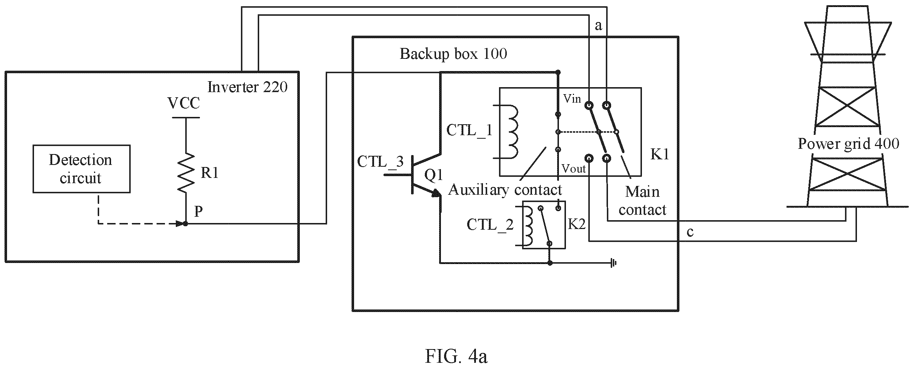

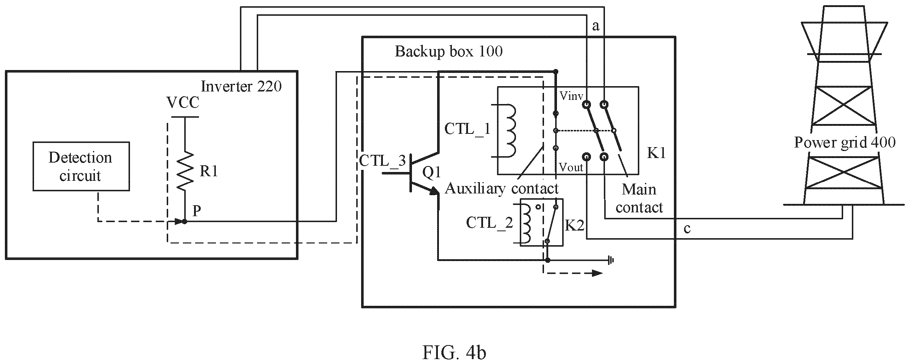

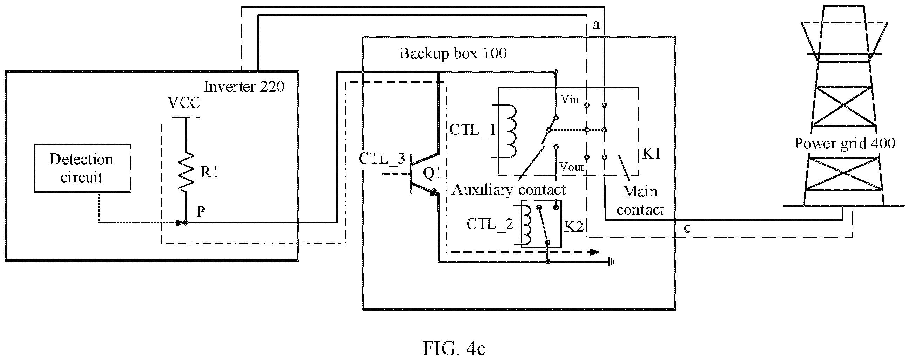

FIG. 4 is a diagram of another circuit connection of a photovoltaic power supply system when a backup box is in a grid-connected/off-grid state according to this application. FIG. 4a is a diagram of a circuit structure of a backup box in a photovoltaic power supply system according to this application. A relay K2 is further connected in series between the auxiliary contact and the ground, and is also referred to as a second switch K2. In an implementation, the relay is designed as a low-power relay, and is connected in series on a potential detection loop. One end of the relay is connected to the auxiliary contact, and the other end is grounded. When the inverter 220 does not supply power to the backup box 100, and the backup box 100 is still in a dormant state, the second switch K2 is in an on state. The second switch K2 uses a normally closed relay to implement the foregoing function. In this way, the second switch K2 does not affect detection of a grid-connected/off state of the grid-connected/off-grid switch K1 before the backup box 100 is started. After the inverter 220 supplies power to the backup box 100, when the backup box 100 is woken up, a controller of the backup box 100 controls the second switch K2 to be turned off, so that the potential detection loop is disconnected.

It should be understood that configuring the second switch K2 does not affect implementation of a function of the original potential detection loop. For example, when the grid-connected/off-grid switch K1 is in an off state, that is, when the main contact of the grid-connected/off-grid switch K1 is in an off state, the auxiliary contact of the grid-connected/off-grid switch K1 is in an on state, the second switch K2 is turned on, the potential detection loop is connected, the direct current source VCC and the detection circuit form a path to the ground end, and the potential at the potential detection point P is the first potential. In other words, when the detection circuit in the inverter 220 detects that the potential at the potential detection point P is the first potential, a controller of the inverter 220 knows that the grid-connected/off-grid switch K1 in the backup box 100 is in an off state. In this case, the inverter 220 normally supplies power to the backup box 100.

For another example, when the grid-connected/off-grid switch K1 is in an on state, that is, when the main contact of the grid-connected/off-grid switch K1 is at an on position, the auxiliary contact of the grid-connected/off-grid switch K1 is at an off position, the potential detection loop is disconnected, the path between the direct current source VCC and the ground is disconnected, and the potential at the potential detection point P is the second potential. In other words, when the detection circuit in the inverter 220 detects that the potential at the potential detection point P is the second potential, a controller of the inverter 220 knows that the grid-connected/off-grid switch K1 in the backup box 100 is in an on state. In this case, the inverter 220 does not supply power to the backup box 100.

Still refer to FIG. 4a. The backup box 100 further includes a switching transistor Q1 inside, and the switching transistor Q1 is in an off state when a main power loop of the backup box 100 is not powered on. When the grid-connected/off-grid switch K1 is in an on state, the controller of the backup box 100 controls the second switch K2 to be turned off, and the path between the direct current source VCC and the ground is disconnected. In this case, if the backup box 100 needs to send a signal to the inverter 220, the controller of the backup box 100 controls turn-on and turn-off of the switching transistor Q1, so that the path between the direct current source VCC and the detection circuit to the ground is continuously connected and disconnected, the detection circuit of the inverter 220 obtains constantly alternating signals, that is, a first potential signal and a second potential signal, at the potential detection point P, and the first potential signal and the second potential signal are converted into digital signals 1 and 0, to implement binary information transfer and processing. The controller can receive, by using a correspondence between a digital signal and real physical information, a plurality of types of different information transmitted by the backup box 100, to implement communication between the backup box 100 and the inverter 220. The transmitted signal herein is a current or a voltage of an internal circuit of the backup box 100, or voltage information or the like of the power grid. This is not limited herein.

Still refer to FIG. 4b. FIG. 4b is a diagram of another circuit connection of a photovoltaic power supply system when a backup box is in an off-grid state according to this application. As shown in the figure, the main contact of the grid-connected/off-grid switch K1 is at an off position, the auxiliary contact of the grid-connected/off-grid switch K1 is at an on position, the second switch K2 is also at an on position, the potential detection loop is connected, and the potential at the potential detection point P is equal to the ground potential of 0, that is, the potential at the potential detection point P is the first potential. After sensing the potential information, the detection circuit of the inverter 220 can notify the controller (not shown in the figure) of the inverter 220. Then, the controller of the inverter 220 can control the inverter 220 to supply power to the backup box 100. In this case, after the backup box 100 is powered on, the controller (not shown in the figure) of the backup box 100 is powered on. After the controller of the backup box 100 determines that the grid-connected/off-grid switch K1 is normally turned off, which indicates that the grid-connected/off-grid switch K1 is not faulty, the controller performs on-grid control, that is, the grid-connected/off-grid switch K1 is controlled to be turned on, so that the main contact is in an on state, and the auxiliary contact is in an off state.

Still refer to FIG. 4c. FIG. 4c is a diagram of another circuit connection of a photovoltaic power supply system when a backup box is in a grid-connected state according to this application. In this case, the main contact of the grid-connected/off-grid switch K1 is already in an on state, and the auxiliary contact of the grid-connected/off-grid switch K1 is in an off state, that is, the potential detection loop is disconnected. Because the backup box 100 further has a communication switch Q1 connected in parallel to the auxiliary contact and two ends of the second switch K2, turn-on and turn-off of the communication switch Q1 can also change the potential at the potential detection point P, which is equivalent to forming another potential detection loop. It is also considered that a potential detection loop in which the communication switch Q1 is located is a communication circuit. In this case, a change of the potential at the potential detection point P is no longer used to reflect a turn-grid-connected/off state of the grid-connected/off-grid switch K1, but is used by the backup box 100 to send a signal to the inverter 220. For example, the inverter 220 translates the first potential signal into 1, and the second potential signal into 0. The turn-grid-connected/off of the communication switch Q1 can implement binary digital signal transmission to the inverter 220. The digital signal can carry a plurality of types of information including a voltage and a current of the inside of the backup box 100, or a switching status of the grid-connected/off-grid switch K1.

Through the design of the detection circuit and the communication circuit for the black start, the backup box 100 can notify the inverter 220 of a connection status of the internal circuit of the backup box 100 when the backup box 100 does not start to operate, and can further feed back rich operating conditions and power grid information to the inverter 220 after the inverter 220 supplies power to the backup box 100.

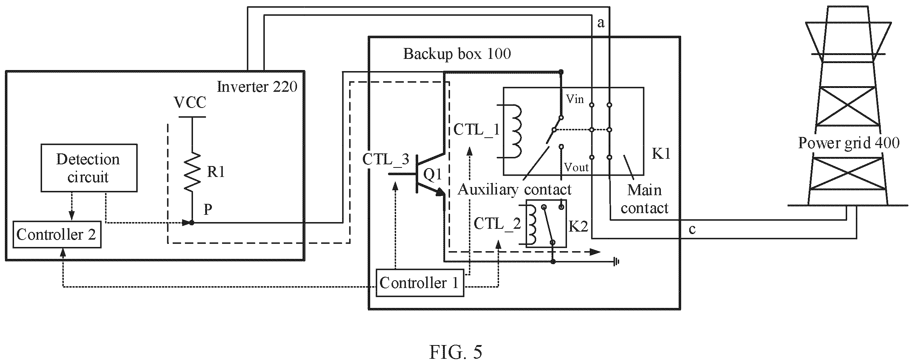

It should be noted that the backup box 100 and the inverter 220 each have a controller, for example, a controller 1 and a controller 2 shown in FIG. 5. The controller 1 can control turn-grid-connected/off of the grid-connected/off-grid switch K1, the second switch K2, and the switching transistor Q1 through control signals CTL_1, CTL_2, and CTL_3. The controller 2 can receive potential information detected by the detection circuit of the inverter 220, to determine whether to control the power circuit in the inverter 220 to supply power to the backup box 100. In addition, in addition to the communication in which the backup box 100 sends a signal to the inverter 220 implemented by the communication circuit in the foregoing embodiment, the controller 1 of the backup box 100 and the controller of the inverter 220 can further communicate in a wired or wireless manner, to implement more information exchange, for example, send an alarm signal to each other when an exception occurs in the two controllers. This is not specifically limited in this application.

An embodiment of this application further provides a backup box. The backup box can be connected to a plurality of alternating current power supplies including the inverter 220 in the foregoing embodiment. A connection relationship and a function of the backup box during specific use are similar to those in the foregoing embodiment, and similar detection and communication in the foregoing embodiment can be implemented. Details are not described herein again.

The embodiments of this application disclosed above are merely provided to help illustrate this application. The embodiments do not describe all details and do not limit this application to only the described specific implementations. It is clear that many modifications and variations may be made based on the content of the embodiments of this application. In this application, these embodiments are selected and described in detail to better explain principles and actual applications of this application, so that a person skilled in the art can well understand and use this application. This application should be defined only by the claims and the full scope and equivalents thereof.

## Claims

1. A photovoltaic power supply system, comprising an inverter and a backup box, wherein an input end of the inverter is configured to connect to a photovoltaic module, an output end of the inverter is connected to an input end of the backup box, and a power grid output end of the backup box is configured to connect to a power grid;
the backup box comprises a grid-connected/off-grid switch, and the grid-connected/off-grid switch comprises a main contact and an auxiliary contact;
the inverter comprises a potential detection point and a direct current auxiliary source;
the input end of the backup box is connected to the power grid output end of the backup box through the main contact;
one end of the auxiliary contact is connected to one end of the potential detection point, the other end of the auxiliary contact is grounded, and the other end of the potential detection point is connected to the direct current auxiliary source; and
when the inverter does not supply power to the backup box and the main contact is at an off position, the auxiliary contact is at an on position, so that a potential at the potential detection point is a first potential; or
when the inverter does not supply power to the backup box and the main contact is at an on position, the auxiliary contact is at an off position, so that a potential at the potential detection point is a second potential, wherein
the first potential is different from the second potential.

2. The photovoltaic power supply system according to claim 1, wherein the main contact and the auxiliary contact are mechanically linked, and when a position of the main contact changes, a position of the auxiliary contact also changes, or when a position of the auxiliary contact changes, a position of the main contact also changes.

3. The photovoltaic power supply system according to claim 1, wherein the backup box comprises a second switch and a communication switch; one end of the second switch is connected to the auxiliary contact, and the other end of the second switch is grounded; and one end of the communication switch is connected to the potential detection point, and the other end of the communication switch is grounded; and
when the inverter does not supply power to the backup box, the communication switch is in an off state, and the second switch is in an on state; or
when the inverter supplies power to the backup box, the second switch is in an off state.

4. The photovoltaic power supply system according to claim 3, wherein when the inverter supplies power to the backup box, the communication switch is configured to be turned on or turned off, so that the potential at the potential detection point is the first potential or the second potential.

5. The photovoltaic power supply system according to any one of claims 1 to 4, wherein the inverter comprises a detection circuit, and the detection circuit is configured to detect the potential at the potential detection point before the inverter supplies power to the backup box; and if the potential at the potential detection point before the inverter supplies power to the backup box is the first potential, the inverter supplies power to the backup box.

6. The photovoltaic power supply system according to any one of claims 1 to 4, wherein the inverter comprises a grid-connected/off-grid controller, the backup box comprises a grid-connected/off-grid switch controller, and the grid-connected/off-grid controller is communicatively connected to the grid-connected/off-grid switch controller;
the grid-connected/off-grid controller is configured to send a grid-connected instruction to the grid-connected/off-grid switch controller when the inverter does not supply power to the backup box and the potential at the potential detection point is the first potential; and
the grid-connected/off-grid switch controller is configured to control, when receiving the grid-connected instruction, the main contact to be in an on state.

7. The photovoltaic power supply system according to any one of claims 1 to 4, comprising a load, wherein the backup box comprises a load output end, one end of the load output end is connected to the input end, and the other end of the load output end is configured to connect to the load.

8. A backup box, comprising a grid-connected/off-grid switch, an input end, and a power grid output end, wherein the grid-connected/off-grid switch comprises a main contact and an auxiliary contact, the input end is connected to the power grid output end through the main contact, the input end is configured to connect to an output end of an alternating current power supply, and the power grid output end is configured to connect to a power grid;
one end of the auxiliary contact is configured to connect to one end of a potential detection point of the alternating current power supply, the other end of the auxiliary contact is grounded, and the other end of the potential detection point is connected to a direct current auxiliary source in the alternating current power supply; and
when the alternating current power supply does not supply power to the backup box and the main contact is at an off position, the auxiliary contact is at an on position, so that a potential at the potential detection point is a first potential; or
when the alternating current power supply does not supply power to the backup box and the main contact is at an on position, the auxiliary contact is at an off position, so that a potential at the potential detection point is a second potential, wherein
the first potential is different from the second potential.

9. The backup box according to claim 8, wherein the main contact and the auxiliary contact are mechanically linked, and when a position of the main contact changes, a position of the auxiliary contact also changes, or when a position of the auxiliary contact changes, a position of the main contact also changes.

10. The backup box according to claim 8, wherein the backup box comprises a second switch and a communication switch; one end of the second switch is connected to the auxiliary contact, and the other end of the second switch is grounded; and one end of the communication switch is connected to the potential detection point, and the other end of the communication switch is grounded; and
when the alternating current power supply does not supply power to the backup box, the communication switch is in an off state, and the second switch is in an on state; or
when the alternating current power supply supplies power to the backup box, the second switch is in an off state.

11. The backup box according to claim 10, wherein when the alternating current power supply supplies power to the backup box, the communication switch is configured to be turned on or turned off, so that the potential at the potential detection point is the first potential or the second potential.

12. The backup box according to any one of claims 8 to 11, comprising a grid-connected/off-grid switch controller, wherein
the grid-connected/off-grid switch controller is configured to control, when receiving a grid-connected instruction, the grid-connected/off-grid switch to be turned on.

13. The backup box according to any one of claims 8 to 11, comprising a load output end, wherein one end of the load output end is connected to the input end, and the other end of the load output end is configured to connect to a load.
